# EUROPEAN PATENT APPLICATION

(11) **EP 4 598 079 A1**
(43) Date of publication of application: **06.08.2025**
(21) Application number: 22959783.6
(22) Date of filing: 26.09.2022
(51) Int. Cl.: H04W 12/08

(54) **MULTIPATH TRANSMISSION METHOD, APPARATUS, AND DEVICE, AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Gunzelmann, Rainer
(86) International application number: PCT/CN2022/121505
(87) International publication number: WO 2024/065131

(57) **Abstract**

The present disclosure provides a multipath transmission method, apparatus, and device, and a storage medium. The method comprises: obtaining a first secure activation state of a first path of a first service, and a second secure activation state of a second path of the first service; wherein the first path is used for direct communication between a first UE and a base station; the second path is used for the first UE to indirectly communicate with the base station via a second UE; the second secure activation state of the second path comprises a secure activation state of a link between the first UE and the second UE; and when the first secure activation state is the same as the second secure activation state, using the first path and the second path to transmit signaling and/or user plane (UP) data of the first service. The present disclosure ensures information security during multipath transmission.

## Description

### TECHNICAL FIELD

The disclosure relates to a field of communication technologies, in particular to a multipath transmission method/apparatus/device and a storage medium.

### BACKGROUND

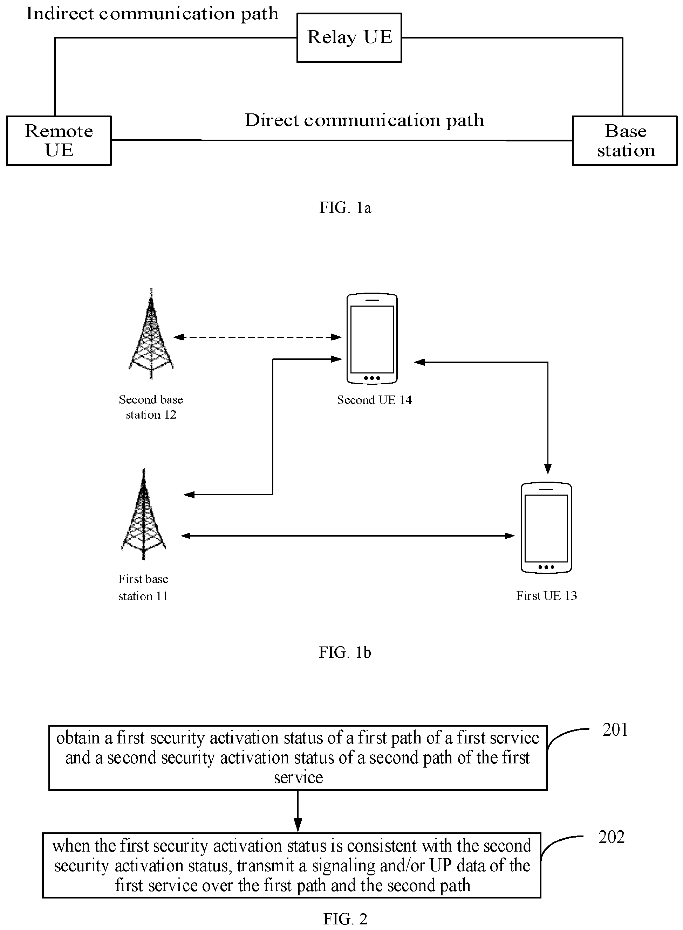

In a communication system, a user equipment (UE) realizes multipath transmission with a base station through multiple paths, so as to improve the reliability and rate of data transmission. FIG. 1a is a schematic diagram of multipath transmission provided by an embodiment of the disclosure. As shown in FIG. 1a, a remote UE communicates with a base station through a direct communication path and an indirect communication path, respectively.

However, there is no security protection scheme for multipath transmission in related art.

### SUMMARY

The disclosure provides a multipath transmission method/apparatus/device and a storage medium, to ensure information security during multipath transmission.

According to a first aspect of embodiments of the disclosure, a multipath transmission method is provided. The method is performed by a first UE and includes:
obtaining a first security activation status of a first path of a first service and a second security activation status of a second path of the first service, in which the first path is used for direct communication between the first UE and a base station, the second path is used for indirect communication between the first UE and the base station through a second UE, and the second security activation status of the second path includes a security activation status of a link between the first UE and the second UE; and
when the first security activation status is consistent with the second security activation status, transmitting a signaling and/or user plane (UP) data of the first service over the first path and the second path.

In the disclosure, the first UE determines the first security activation status of the first path between the first UE and the base station and the second security activation status of the second path between the first UE and the base station. The first path and the second path are used for multipath transmission of the first service between the base station and the first UE, and the first security activation status of the first path is consistent with the third security activation state of the second path. In response to the first security activation status of the first path being consistent with the second security activation status of the second path, simultaneous multipath transmission of the signaling and/or UP data of the first service is performed using the first path and the second path. In the disclosure, since the base station can ensure that the first security activation status of the Uu link of the first path is consistent with the third security activation status of the Uu link of the second path, when the first security activation status of the first path is consistent with the second security activation status of the second path, it means that the first security activation status of the Uu link of the first path, the third security activation status of the Uu link of the second path, and the second security activation status of the PCS link of the second path are all consistent. That is, the security activation status of the direct communication path is consistent with that of the indirect communication path. Therefore, in the disclosure, only when the security activation status of the direct communication path is consistent with that of the indirect communication path, simultaneous multipath transmission of the signaling and/or UP data of the first service is performed over the first path and the second path, thus ensuring the information security during multipath transmission.

According to a second aspect of embodiments of the disclosure, a multipath transmission method is provided. The method is performed by a first base station and includes:
determining a first security activation status of a first path of a first service and/or a third security activation status of a second path of the first service, in which the first path is used for direct communication between a first UE and the first base station, the second path is used for indirect communication between the first UE and the first base station through a second UE, the third security activation status of the second path includes a security activation status of a link between the second UE and the base station, and the first security activation status is consistent with the third security activation status.

According to a third aspect of embodiments of the disclosure, a multipath transmission method is provided. The method is performed by a second base station and includes:
obtaining a first security activation status of a first path of a first service and/or a third security activation status of a second path of the first service, in which the first path is used for direct communication between a first UE and a first base station, the second path is used for indirect communication between the first UE and the first base station through a second UE, the third security activation status of the second path includes a security activation status of a link between the second UE and the base station, and the first security activation status is consistent with the third security activation status.

According to a fourth aspect of embodiments of the disclosure, a communication apparatus is provided. The apparatus is configured in a first UE and includes:
a transceiver module, configured to obtain a first security activation status of a first path of a first service and a second security activation status of a second path of the first service, in which the first path is used for direct communication between the first UE and a base station, the second path is used for indirect communication between the first UE and the base station through a second UE, and the second security activation status of the second path includes a security activation status of a link between the first UE and the second UE; and
a processing module, configured to, when the first security activation status is consistent with the second security activation status, transmit a signaling and/or UP data of the first service over the first path and the second path.

According to a fifth aspect of embodiments of the disclosure, a communication apparatus is provided. The apparatus is configured in a first base station and includes:
a processing module, configured to determine a first security activation status of a first path of a first service and/or a third security activation status of a second path of the first service, in which the first path is used for direct communication between a first UE and the first base station, the second path is used for indirect communication between the first UE and the first base station through a second UE, the third security activation status of the second path includes a security activation status of a link between the second UE and the base station, and the first security activation status is consistent with the third security activation status.

According to a sixth aspect of embodiments of the disclosure, a communication apparatus is provided. The apparatus is configured in a second base station and includes:
a processing module, configured to obtain a first security activation status of a first path of a first service and/or a third security activation status of a second path of the first service, in which the first path is used for direct communication between a first UE and a first base station, the second path is used for indirect communication between the first UE and the first base station through a second UE, the third security activation status of the second path includes a security activation status of a link between the second UE and the base station, and the first security activation status is consistent with the third security activation status.

According to a seventh aspect of embodiments of the disclosure, a communication device is provided. The communication device includes: a processor. When the processor calls a computer program stored in a memory, the method described in the first aspect above is implemented.

According to an eighth aspect of embodiments of the disclosure, a communication device is provided. The communication device includes: a processor. When the processor calls a computer program stored in a memory, the method described in the second aspect above is implemented.

According to a ninth aspect of embodiments of the disclosure, a communication device is provided. The communication device includes: a processor. When the processor calls a computer program stored in a memory, the method described in the third aspect above is implemented.

According to a tenth aspect of embodiments of the disclosure, a communication device is provided. The communication device includes: a processor and a memory having a computer program stored thereon. When the processor executes the computer program stored in the memory, the communication device is caused to implement the method described in the first aspect above.

According to an eleventh aspect of embodiments of the disclosure, a communication device is provided. The communication device includes: a processor and a memory having a computer program stored thereon. When the processor executes the computer program stored in the memory, the communication device is caused to implement the method described in the second aspect above.

According to a twelfth aspect of embodiments of the disclosure, a communication device is provided. The communication device includes: a processor and a memory having a computer program stored thereon. When the processor executes the computer program stored in the memory, the communication device is caused to implement the method described in the third aspect above.

According to a thirteenth aspect of embodiments of the disclosure, a communication device is provided. The communication device includes: a processor and an interface circuit. The interface circuit is configured to receive code instructions and transmit the code instructions to the processor. The processor is configured to run the code instructions to cause the device to perform the method described in the first aspect above.

According to a fourteenth aspect of embodiments of the disclosure, a communication device is provided. The communication device includes: a processor and an interface circuit. The interface circuit is configured to receive code instructions and transmit the code instructions to the processor. The processor is configured to run the code instructions to cause the device to perform the method described in the second aspect above.

According to a fifteenth aspect of embodiments of the disclosure, a communication device is provided. The communication device includes: a processor and an interface circuit. The interface circuit is configured to receive code instructions and transmit the code instructions to the processor. The processor is configured to run the code instructions to cause the device to perform the method described in the third aspect above.

According to a sixteenth aspect of embodiments of the disclosure, a communication system is provided. The system includes the communication devices described in the fourth aspect to the sixth aspect, or the system includes the communication devices described in the seventh aspect to the ninth aspect, or the system includes the communication devices described in the tenth aspect to the twelfth aspect, or the system includes the communication devices described in the thirteenth aspect to the fifteenth aspect.

According to a seventeenth aspect of embodiments of the disclosure, a computer-readable storage medium is provided. The computer-readable storage medium is configured to store instructions used by the above terminal. When the instructions are executed, the terminal is caused to implement any of the methods described in the above first aspect to the third aspect.

According to an eighteenth aspect of embodiments of the disclosure, a computer program product including computer programs is provided. When the computer programs are run by a computer, the computer is caused to implement any of the methods described in the above first aspect to the third aspect.

According to a nineteenth aspect of embodiments of the disclosure, a chip system is provided. The chip system includes at least one processor and an interface for supporting the terminal in realizing the functions involved in any of the methods described in the above first aspect to the third aspect, e.g., determining or processing at least one of data or information involved in the methods described above. In a possible design, the chip system further includes a memory. The memory is configured to store necessary computer programs and data of a source secondary node. The chip system may consist of chips or may include a chip and other discrete components.

According to a twentieth aspect of embodiments of the disclosure, a computer program is provided. When the computer program is running on a computer, the computer is caused to implement any of the methods described in the above first aspect to the third aspect.

### BRIEF DESCRIPTION OF THE DRAWINGS

The above and/or additional aspects and advantages of the disclosure will become apparent and more readily appreciated from the following descriptions made with reference to the accompanying drawings.
FIG. 1a is a schematic diagram of a multipath transmission structure provided by an embodiment of the disclosure.
FIG. 1b is a schematic diagram of a communication system provided by an embodiment of the disclosure.
FIG. 2 is a flowchart of a multipath transmission method provided by an embodiment of the disclosure.
FIG. 3 is a flowchart of a multipath transmission method provided by an embodiment of the disclosure.
FIG. 4 is a flowchart of a multipath transmission method provided by an embodiment of the disclosure.
FIG. 5 is a flowchart of a multipath transmission method provided by an embodiment of the disclosure.
FIG. 6 is a flowchart of a multipath transmission method provided by an embodiment of the disclosure.
FIG. 7 is a flowchart of a multipath transmission method provided by an embodiment of the disclosure.
FIG. 8 is a flowchart of a multipath transmission method provided by an embodiment of the disclosure.
FIG. 9 is a flowchart of a multipath transmission method provided by an embodiment of the disclosure.
FIGS. 10a-10e are flowcharts of a multipath transmission method provided by embodiments of the disclosure.
FIG. 11 is a schematic diagram of a communication apparatus provided by an embodiment of the disclosure.
FIG. 12a is a schematic diagram of a communication apparatus provided by an embodiment of the disclosure.
FIG. 12b is a schematic diagram of a communication apparatus provided by an embodiment of the disclosure.
FIG. 13 is a block diagram of a communication device provided by an embodiment of the disclosure.
FIG. 14 is a schematic diagram of a chip provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following descriptions of embodiments do not represent all the implementations consistent with the embodiments of the disclosure. Instead, they are merely examples of apparatuses and methods consistent with aspects related to the disclosure as recited in the appended claims.

Terms used in the embodiments of the disclosure are only for the purpose of describing specific embodiments, and are not intended to limit the embodiments of the disclosure. The singular forms of "a" and "the" used in the disclosure and the appended claims are also intended to include plural forms, unless the context clearly indicates other meanings. It should also be understood that the term "and/or" used in the disclosure refers to and includes any or all possible combinations of one or more associated listed items.

It is understandable that although the terms "first", "second", and "third" may be used in the embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "in a case that" or "in response to determining that".

The embodiments of the disclosure are described in detail below, and examples of which are illustrated in the accompanying drawings, in which the same or similar symbols indicate the same or similar elements. The embodiments described below with reference to the accompanying drawings are exemplary and are intended to be used to explain the disclosure and are not to be construed as limiting the disclosure.

For ease of understanding, the terms involved in the disclosure are first introduced.
1. Remote UE
   It can communicate with a base station through another UE.
2. Relay UE
   It is used to realize relay communication between another UE and a base station.
3. Multipath transmission
   A signaling and/or user plane (UP) data of a proximity based service (Prose) service can be simultaneously transmitted between a remote UE and a base station through multiple paths.
4. Prose service

The Prose service is a service provided by a 3rd generation partnership project (3GPP) system for UEs in a closer proximity. The ProSe service supports public safety, Internet of Things, Internet of Vehicles and other application scenarios. The ProSe service includes two aspects, i.e., ProSe discovery and ProSe communication. The ProSe discovery refers to a process that a UE discovers a nearby UE supporting the corresponding Prose service through a broadcast message. The ProSe communication refers to a process of establishing a secure communication channel between UEs for carrying out secure data communication.

In a procedure of single path transmission, security policies configured by a network for a UE includes: REQUIRED, NOT NEEDED and PREFERRED. The above "REQUIRED" means that security protection is needed, and the UE only establishes a connection with another UE using a non-NULL confidentiality and/or integrity algorithm. The above "NOT NEEDED" means that the UE should only establishes a connection without security protection. The above-mentioned "PREFFERED" means that the UE may try to establish the secure connection, but may accept the connection without security protection. However, in a procedure of multipath transmission, if the network configures security policies for different paths of the multiple paths, the security policies of different paths may be different.

Understandably, during the multipath transmission, if the security policies of different paths are not consistent, leakage of information or data may occur. For example, if a security policy of a direct communication path is to enable confidentiality and/or integrity protection, and a security policy of an indirect communication path is to disable confidentiality and/or integrity protection, when a remote UE transmits data with higher confidentiality over the multiple paths, the data transmitted through the indirect communication path may be easily intercepted, resulting in the information or data leakage. Therefore, how to enable the consistent security policies of the different paths during the multipath transmission to ensure the information security of the multipath transmission is a technical problem to be solved urgently.

In order to better understand a multipath transmission method disclosed by an embodiment of the disclosure, a communication system to which the embodiment of the disclosure can be applied will be described first.

FIG. 1b is a schematic diagram of a communication system provided by an embodiment of the disclosure. The communication system may include, but is not limited to, one base station and one UE. The number and form of devices shown in FIG. 1b are considered only as examples and do not constitute a limitation to embodiments of the disclosure. In practical application, the system may include two or more base stations and two or more terminals. The communication system shown in FIG. 1b includes a first base station 11, a first UE 13, and a second UE 14. Optionally, it may also include a second base station 12. As shown in FIG. 1b, the first UE 13 may be directly connected to the first base station 11, and may also be indirectly connected to the first base station 11 through the second UE 14. Alternatively, the first UE 13 may be directly connected to the first base station 11 and indirectly connected to the second base station 12 through the second UE 14.

It is noteworthy that the technical solutions of the embodiments of the disclosure are applicable to various communication systems, such as, a long term evolution (LTE) system, a 5th generation (5G) mobile communication system, a 5G new radio (NR) system, or other future new mobile communication systems.

The first base station 11 and the second base station 12 in the embodiments of the disclosure are entities on a network side for transmitting or receiving signals. For example, the base station 11 may be an evolved NodeB (eNB), a transmission reception point (TRP), a radio remote head (RRH), a next generation NodeB (gNB) in a NR system, a base station in other future mobile communication systems, or an access node in a wireless fidelity (WiFi) system. The specific technology and specific device form adopted by the base station are not limited in the embodiments of the disclosure. The base stations in the embodiments of the disclosure may be composed of a central unit (CU) and a distributed unit (DU). The CU may also be called control unit. The use of CU-DU structure allows to divide a protocol layer of the base station, such that part of the protocol layer functions are placed in the CU for centralized control, and part or all of the remaining protocol layer functions are distributed in the DU, and the DU is centrally controlled by the CU.

The first UE 13 and the second UE 14 in the embodiments of the disclosure are entities on a user side for receiving or transmitting signals, such as a cellular phone. The terminal may also be referred to as terminal, UE, mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understandable that the communication system described in the embodiments of the disclosure is introduced here to clearly illustrate the technical solutions of the embodiments of the disclosure, and does not constitute a limitation on the technical solutions of the embodiments of the disclosure. It is understandable by those skilled in the art that as system architectures evolve and new business scenarios emerge, the technical solutions of the embodiments of the disclosure are also applicable to similar technical problems.

The multipath transmission method/apparatus/device and storage medium provided by the embodiments of the disclosure will be described in detail with reference to the attached drawings.

FIG. 2 is a flowchart of a multipath transmission method provided by an embodiment of the disclosure. The method is performed by a first UE. As shown in FIG. 2, the multipath transmission method may include the following steps.

At step 201, a first security activation status of a first path of a first service and a second security activation status of a second path of the first service are obtained.

In an embodiment of the disclosure, the first service may include a Prose service. The first UE may be a remote UE, and the second UE may be a relay UE. The first path is used for direct communication between the first UE and a base station, i.e., it may be a direct communication path. The second path is used for indirect communication between the first UE and the base station through a second UE, i.e., it may be an indirect communication path, which includes a PC5 link between the first UE and the second UE, and a Uu link between the second UE and the base station. The first security activation status of the first path may be a security activation status of the Uu link of the first path, and the second security activation status of the second path may include a security activation status of the link (i.e., the PCS link) between the first UE and the second UE.

In an embodiment of the disclosure, the security activation status (e.g., the first security activation status, the second security activation status or the third security activation status) may be: protection activation or protection deactivation.

In detail, as shown in FIG. 1a, the multipath transmission of the first service includes the first path and the second path. The first path includes the Uu link between the first UE and the base station, and the second path may be a path for the first UE to access the network through a L3 UE-to-Network Relay and a N3IWF, which includes the PC5 link between the first UE and the second UE and the Uu link between the second UE and the base station. In an example, the first path is also called "direct transmission path", "direct path", "direct communication path", "3GPP access", etc. The second path is also called "indirect transmission path", "indirect path", "indirect communication path", "non-3GPP access", etc.

For the same first service, a policy control function (PCF) network element usually sends a security policy to the first UE and the second UE (for example, the PCF sends the security policy to the first UE and the second UE in a service authorization procedure), so that the first UE and the second UE may establish the PCS link through negotiation based on the security policy, and determine the security activation status of the PC5 link (i.e., the second security activation status of the second path). A session management function (SMF) network element may also send a security policy to the base station (for example, the SMF network element sends the security policy to the base station during a session establishment procedure of a protocol data unit (PDU)), so that the base station may determine the first security activation status of the first path and the third security activation status of the second path based on the security policy. The third security activation status of the second path includes a security activation status of the link (Uu link) between the second UE and the base station, and the base station may establish the Uu link of the first path and the Uu link of the second path.

It should be noted that, for the same first service, the security policy issued by the PCF is the same as that issued by the SMF. The security policy may be "REQUIRED", "NOT NEEDED", and "PREFERRED". The above "REQUIRED" means that security protection is needed, and the UE only establish a connection with another UE using a non-NULL confidentiality and/or integrity algorithm, or establish a connection with the base station using a non-NULL confidentiality and/or integrity algorithm. The above "NOT NEEDED" means that the UE should only establish a connection without security protection. The above-mentioned "PREFFERED" means that the UE may try to establish a secure connection, but may accept a connection without security protection.

When the first UE, the second UE or the base station receives the security policy of "REQUIRED", it directly determines the security activation status as protection activation. When the first UE, the second UE or the base station receives the security policy of "NOT NEEDED", it directly determines the security activation status as protection deactivation. When the first UE, the second UE or the base station receives the security policy of "PREFFERED", it may determine the security activation status as: protection activation or protection deactivation.

Therefore, when the security policy is "REQUIRED" or "NOT NEEDED", it can be ensured that the security activation status of the finally established PCS link is the same as that of the Uu link, while if the security policy is "PREFFERED", it cannot be ensured that the security activation status of the finally established PCS link is the same as that of the Uu link.

Based on this, through the method disclosed in the disclosure, the security activation status of each path in multipath transmission can be the same when the security policy for multipath transmission of the first service issued by the network is "PREFERRED".

In an embodiment of the disclosure, the above step 201 is performed after the first path and the second path are established. However, it should be noted that in an embodiment of the disclosure, when establishing the first path and the second path, it should be ensured that the first security activation status of the established first path is consistent with the third security activation status of the established second path. It can be seen from the above that the first security activation status of the first path and the third security activation status of the second path are both determined by the base station, so in the disclosure, it should be ensured that the first security activation status of the first path determined by the base station is consistent with the third security activation status of the second path, and the contents of this section will be described in detail in the embodiments performed by the base station.

In an embodiment of the disclosure, after the first path is established, the first UE determines the first security activation status of the first path between the first UE and the base station. After the second path and/or the PCS link in the second path is established, the first UE determines the second security activation status of the second path between the first UE and the base station.

In an embodiment of the disclosure, the method for the first UE to determine the first security activation status of the first path between the first UE and the base station may include at least one of:
obtaining a first indication message sent by the base station, in which the first indication message is used to indicate the first security activation status of the first path; or
determining the first security activation status of the first path based on the established first path.

In an embodiment of the disclosure, after determining the first security activation status of the first path, the first UE stores the first security activation status of the first path, so that the first security activation status of the first path may be used to compare with the second security activation status of the second path to determine whether to perform the multipath transmission.

In an embodiment of the disclosure, after determining the first security activation status of the Uu link in the first path (i.e., the direct communication path), the first UE stores the first security activation status of the Uu link in the first path. Based on whether the stored first security activation status is consistent with the second security activation status of the PCS link in the second path (i.e., the indirect communication path) determined by the second UE, it is determined whether the first UE transmits a signaling and/or UP data of the first service over the first path and the second path simultaneously.

In an embodiment of the disclosure, the method for the first UE to determine the second security activation status of the second path between the first UE and the base station may include at least one of:
negotiating with the second UE for a second security activation status of the link between the first UE and the second UE; and/or
determining the second security activation status of the link between the first UE and the second UE based on the established link between the first UE and the second UE.

It should be noted that, in an embodiment of the disclosure, the first UE may consider the first security activation status of the first path when negotiating with the second UE to determine the second security activation status in the second path, so that the negotiated second security activation status of the second path is consistent with the first security activation status of the first path.

In another embodiment of the disclosure, when the first UE negotiates with the second UE to determine the second security activation status in the second path, it may not consider the first security activation status of the first path. The negotiated security activation status of the PC5 link may be the same or different from the first security activation status of the first path.

In an embodiment of the disclosure, the above security activation status (which refers to the first security activation status, the second security activation status, or the third security activation status) includes at least one of:
a security activation status corresponding to UP integrity protection of a PCS link;
a security activation status corresponding to UP integrity protection of a Uu link;
a security activation status corresponding to UP encryption protection of a PCS link;
a security activation status corresponding to UP encryption protection of a Uu link;
   a security activation status corresponding to signaling integrity protection of a PC5 link;
   a security activation status corresponding to signaling integrity protection of a Uu link;
   a security activation status corresponding to signaling encryption protection of a PC5 link; or
   a security activation status corresponding to signaling encryption protection of a Uu link.

In an embodiment of the disclosure, "the first security activation status of the first path is consistent with the third security activation status of the second path" described above may be understood as:
the first security activation status corresponding to UP integrity protection of a link between the first UE and the base station in the first path is consistent with the third security activation status corresponding to UP integrity protection of the link between the second UE and the base station in the second path (they may be activated protection or deactivated protection);
the first security activation status corresponding to UP encryption protection of the link between the first UE and the base station in the first path is consistent with the third security activation status corresponding to UP encryption protection of the link between the second UE and the base station in the second path;
the first security activation status corresponding to signaling integrity protection of the link between the first UE and the base station in the first path is consistent with the third security activation status corresponding to signaling integrity protection of the link between the second UE and the base station in the second path; or
the first security activation status corresponding to signaling encryption protection of the link between the first UE and the base station in the first path is consistent with the third security activation status corresponding to signaling encryption protection of the link between the second UE and the base station in the second path.

At step 202, when the first security activation status is consistent with the second security activation status, a signaling and/or UP data of the first service is transmitted over the first path and the second path.

It should be noted that, in an embodiment of the disclosure, when the first security activation status is inconsistent with the second security activation status, the first UE may refuse to transmit the signaling and/or UP data of the first service over the first path and the second path simultaneously.

In an embodiment of the disclosure, the first security activation status in the first path is consistent with the second security activation status in the second path, which is understood as:
the first security activation status corresponding to UP integrity protection of a link between the first UE and the base station in the first path is consistent with the second security activation status corresponding to UP integrity protection of the link between the first UE and the second UE in the second path;
the first security activation status corresponding to UP encryption protection of the link between the first UE and the base station in the first path is consistent with the second security activation status corresponding to UP encryption protection of the link between the first UE and the second UE in the second path;
the first security activation status corresponding to signaling integrity protection of the link between the first UE and the base station in the first path is consistent with the second security activation status corresponding to signaling integrity protection of the link between the first UE and the second UE in the second path; or
the first security activation status corresponding to signaling encryption protection of the link between the first UE and the base station in the first path is consistent with the second security activation status corresponding to signaling encryption protection of the link between the first UE and the second UE in the second path.

It can be known from the above step 201 that the base station can ensure that the first security activation status of the first path is consistent with the third security activation status of the second path when establishing the first path and the second path, and if the first security activation status in the first path is also consistent with the second security activation status in the second path, it means that the security activation status of the Uu link in the direct communication path, the security activation status of the Uu link in the indirect communication path, and the security activation status of the PCS link in the indirect communication path are all consistent. That is, the security activation status of the direct communication path is consistent with that of the indirect communication path. Therefore, in an embodiment of the disclosure, only when the security activation status of the direct communication path is consistent with that of the indirect communication path, simultaneous multipath transmission of the signaling and/or UP data of the first service can be realized over the first path and the second path, thus ensuring the information security during the multipath transmission.

In conclusion, in the multipath transmission method provided by the disclosure, the first UE obtains the first security activation status of the first path of the first service and the second security activation status of the second path of the first service. The first path is used for direct communication between the first UE and the base station, and the second path is used for indirect communication between the first UE and the base station through the second UE. The second security activation status of the second path includes the security activation status of the link between the first UE and the second UE. When the first security activation status is consistent with the second security activation status, the signaling and/or UP data of the first service can be transmitted over the first path and the second path. In the disclosure, since the base station can ensure that the first security activation status of the Uu link of the first path is consistent with the third security activation status of the Uu link of the second path, when the first security activation status in the first path is consistent with the second security activation status in the second path, it means that the first security activation status of the Uu link in the first path, the third security activation status of the Uu link in the second path, and the second security activation status of the PCS link in the second path are all consistent. That is, the security activation status of the direct communication path is consistent with that of the indirect communication path. Therefore, in the disclosure, only when the security activation status of the direct communication path is consistent with that of the indirect communication path, simultaneous multipath transmission of the signaling and/or UP data of the first service can be realized over the first path and the second path, thus ensuring the information security during the multipath transmission.

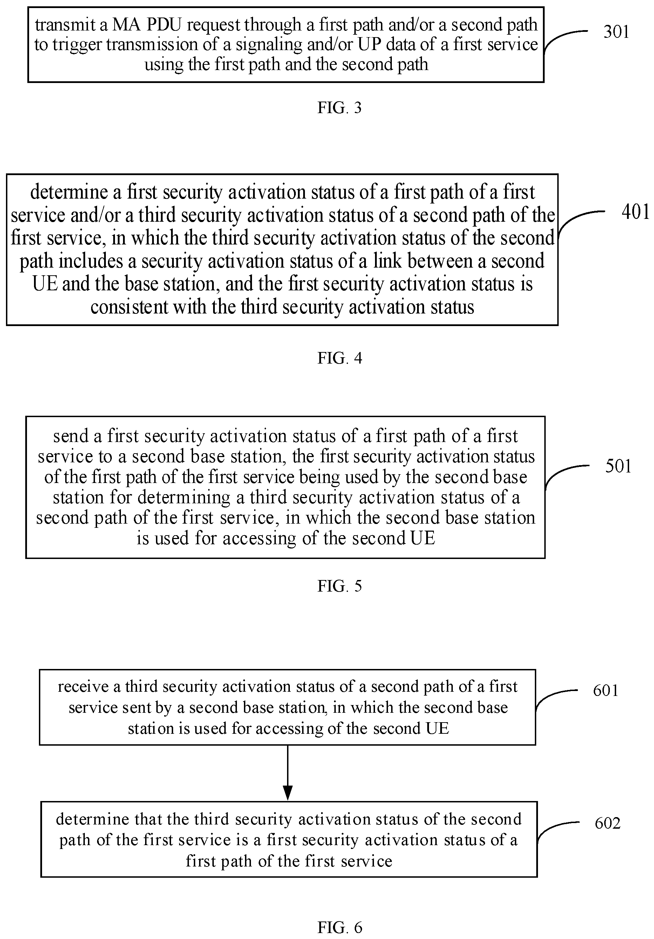

FIG. 3 is a flowchart of a multipath transmission method provided by an embodiment of the disclosure. The method is performed by a first UE. As shown in FIG. 3, the multipath transmission method may include the following step.

At step 301, a multiple access (MA) PDU request is transmitted through a first path and/or a second path to trigger transmission of signaling and/or UP data of a first service using the first path and the second path.

In conclusion, in the multipath transmission method provided by the disclosure, the first UE obtains the first security activation status of the first path of the first service and the second security activation status of the second path of the first service. The first path is used for direct communication between the first UE and the base station, and the second path is used for indirect communication between the first UE and the base station through the second UE. The second security activation status of the second path includes the security activation status of the link between the first UE and the second UE. When the first security activation status is consistent with the second security activation status, the signaling and/or UP data of the first service can be transmitted over the first path and the second path. In the disclosure, since the base station can ensure that the first security activation status of the Uu link of the first path is consistent with the third security activation status of the Uu link of the second path, when the first security activation status in the first path is consistent with the second security activation status in the second path, it means that the first security activation status of the Uu link in the first path, the third security activation status of the Uu link in the second path, and the second security activation status of the PCS link in the second path are all consistent. That is, the security activation status of the direct communication path is consistent with that of the indirect communication path. Therefore, in the disclosure, only when the security activation status of the direct communication path is consistent with that of the indirect communication path, simultaneous multipath transmission of the signaling and/or UP data of the first service can be realized over the first path and the second path, thus ensuring the information security during the multipath transmission.

FIG. 4 is a flowchart of a multipath transmission method provided by an embodiment of the disclosure. The method is performed by a first base station. As shown in FIG. 4, the multipath transmission method may include the following step.

At step 401, a first security activation status of a first path of a first service and/or a third security activation status of a second path of the first service is determined, in which the third security activation status of the second path includes a security activation status of a link between a second UE and the base station, and the first security activation status is consistent with the third security activation status.

In an embodiment of the disclosure, the base station determines the first security activation status of the first path and the third security activation status of the second path based on the first service and/or a UE capability.

Optionally, in an embodiment of the disclosure, determining the third security activation status of the second path of the first service includes at least one of:
determining that the first security activation status of the first path of the first service is the third security activation status of the second path of the first service; or
determining the third security activation status of the second path of the first service in the same way as determining the first security activation status of the first path of the first service.

It should be noted that in an embodiment of the disclosure, the base station may manage both the first path and the second path, or the base station may only manage the first path, or the base station may only manage the second path.

When the base station manages both the first path and the second path, it determines the first security activation status of the first path of the first service and the third security activation status of the second path of the first service, and establishes the first path and the second path based on this. In detail, the base station may first establish the first path and then establish the second path, or the base station may establish the second path first, and then establish the first path. When the base station first establishes the first path and then the second path, after determining the first security activation status of the first path, it stores the first security activation status of the first path. When receiving indication information sent by the first UE indicating that multipath transmission of the first service is to be performed, the base station may store the first security activation status of the first path. When establishing the second path, the base station determines the third security activation status of the second path based on the first security activation status of the first path, to ensure that the determined first security activation status of the second path is consistent with the third security activation status of the first path.

When the base station only manages the first path, it only establishes the first path. The first security activation status of the first path may be determined by the base station or determined by the base station through an interaction with another base station managing the second path. When the base station only manages the second path, it only establishes the second path. The third security activation status of the second path may be determined by the base station or determined by the base station through an interaction with another base station managing the first path. The contents in this section will be described in that following embodiments.

For different situations, the method of determining the first security activation status of the first path and/or the method of determining the third security activation status of the second path may be different. The details of this section are described in the following embodiments.

However, it should be noted that in the disclosure, the first security activation status of the first path determined by the base station should be consistent with the third security activation status of the second path. In this premise, the step of "when the first UE determines that the first security activation status of the first path is consistent with the second security activation status of the second path, transmitting the signaling and/or UP data of the first service through multipath transmission" can realize the information security during multipath transmission. In detail, since the first security activation status of the established first path is consistent with the third security activation status of the established second path, when the first UE determines that the first security activation status of the first path is consistent with the second security activation status of the second path, it means that the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

Other details about step 401 can be described with reference to the above embodiments.

In conclusion, in the multipath transmission method provided by the disclosure, the first UE determines the first security activation status of the first path of the first service and/or the third security activation status of the second path of the first service. The first path is used for direct communication between the first UE and the first base station, and the second path is used for indirect communication between the first UE and the base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PC5 link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

FIG. 5 is a flowchart of a multipath transmission method provided by an embodiment of the disclosure. The method is performed by a first base station. As shown in FIG. 5, the multipath transmission method may include the following step.

At step 501, a first security activation status of a first path of a first service is sent to a second base station, the first security activation status of the first path of the first service being used by the second base station for determining a third security activation status of a second path of the first service, in which the second base station is used for accessing of the second UE.

The scenario corresponding to the embodiment of FIG. 5 is that the first base station only manages the first path, and the first path (i.e., direct communication path) is first established and then the second path (i.e., indirect communication path) is established. The first base station is used for establishing the first path, and the second base station is used for establishing the second path.

In an embodiment of the disclosure, after the first base station establishes the first path, it first determines the first security activation status of the first path, e.g., determining the first security activation status of the first path based on the first service and/or a UE capability, and stores the first security activation status of the Uu link of the first path, e.g., storing the first security activation status of the Uu link of the first path when receiving indication information sent by the first UE indicating that the multipath transmission of the first service is to be performed currently, and then sends the first security activation status of the first path of the first service to the second base station, so that the second base station determines the third security activation status of the second path of the first service being consistent with the first security activation status according to the first security activation status of the first path of the first service.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PC5 link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

FIG. 6 is a flowchart of a multipath transmission method provided by an embodiment of the disclosure. The method is performed by a first base station. As shown in FIG. 6, the multipath transmission method may include the following steps.

At step 601, a third security activation status of a second path of a first service sent by a second base station is received, in which the second base station is used for accessing the second UE.

The scenario corresponding to the embodiment of FIG. 6 is that the first base station only manages the first path, and the second path (i.e., indirect communication path) is first established and then the first path (i.e., direct communication path) is established. The first base station is used for establishing the first path, and the second base station is used for establishing the second path.

In an embodiment of the disclosure, after establishing the second path, the second base station may first determine the third security activation status of the second path, e.g., determining the third security activation status of the second path based on the first service and/or the UE capability, and sends the third security activation status of the second path of the first service to the first base station, so that the first base station determine s the first security activation status of the first path of the first service being consistent with the third security activation status according to the third security activation status.

At step 602, it is determined that the third security activation status of the second path of the first service is the first security activation status of the first path of the first service.

That is, the third security activation status is directly used as the first security activation status of the first path, and thus it is ensured that the first security activation status is consistent with the third security activation status.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

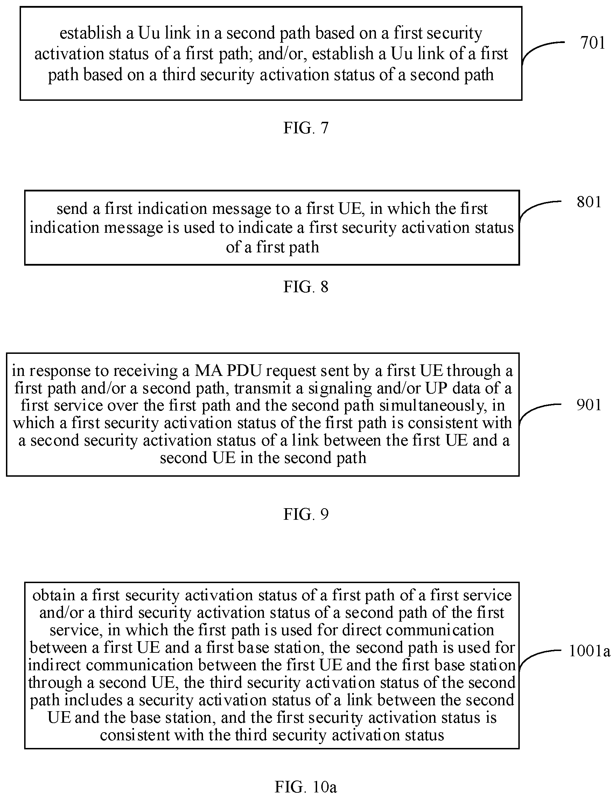

FIG. 7 is a flowchart of a multipath transmission method provided by an embodiment of the disclosure. The method is performed by a first base station. As shown in FIG. 7, the multipath transmission method includes the following step.

At step 701, a Uu link in a second path is established based on a first security activation status of a first path; and/or, a Uu link of a first path is established based on a third security activation status of a second path.

By performing the above step 701, the first security activation status of the established first path is caused to be consistent with the third security activation status of the second path.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

FIG. 8 is a flowchart of a multipath transmission method provided by an embodiment of the disclosure. The method is performed by a first base station. As shown in FIG. 8, the multipath transmission method includes the following step.

At step 801, a first indication message is sent to a first UE, in which the first indication message is used to indicate a first security activation status of a first path.

In an embodiment of the disclosure, the base station sends the first indication message indicating the first security activation status of the first path to the first UE, so that the first UE determines whether to use multipath transmission to transmit the signaling and/or UP data of the first service based on the first security activation status of the first path and the second security activation status of the second path.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PC5 link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

FIG. 9 is a flowchart of a multipath transmission method provided by an embodiment of the disclosure. The method is performed by a first base station. As shown in FIG. 9, the multipath transmission method includes the following step.

At step 901, in response to receiving a MA PDU request sent by a first UE through a first path and/or a second path, a signaling and/or UP data of a first service is transmitted over the first path and the second path simultaneously, in which a first security activation status of the first path is consistent with a second security activation status of a link between the first UE and a second UE in the second path.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

FIG. 10a is a flowchart of a multipath transmission method provided by an embodiment of the disclosure. The method is performed by a second base station. As shown in FIG. 10a, the multipath transmission method includes the following step.

At step 1001a, a first security activation status of a first path of a first service and/or a third security activation status of a second path of the first service is obtained, in which the first path is used for direct communication between a first UE and a first base station, the second path is used for indirect communication between the first UE and the first base station through a second UE, the third security activation status of the second path includes a security activation status of a link between the second UE and the base station, and the first security activation status is consistent with the third security activation status.

Optionally, in an embodiment of the disclosure, determining the third security activation status of the second path of the first service includes at least one of:
determining that the first security activation status of the first path of the first service is the third security activation status of the second path of the first service; or
determining the third security activation status of the second path of the first service in the same way as determining the first security activation status of the first path of the first service.

The detailed description of step 1001a can be described with reference to the above embodiments.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

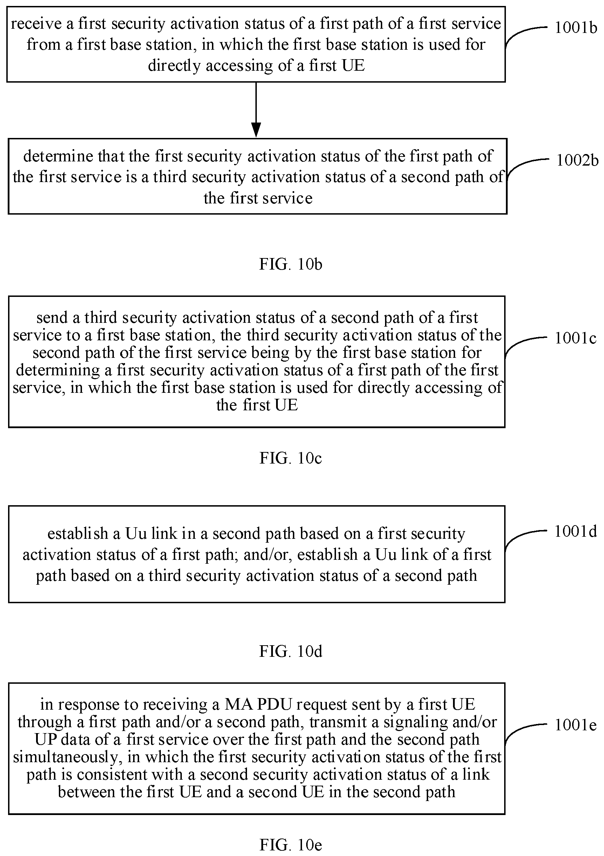

FIG. 10b is a flowchart of a multipath transmission method provided by an embodiment of the disclosure. The method is performed by a second base station. As shown in FIG. 10b, the multipath transmission method includes the following steps.

At step 1001b, a first security activation status of a first path of a first service is received from a first base station, in which the first base station is used for direct accessing of a first UE.

The scenario corresponding to the embodiment of FIG. 10b is that the second base station only manages a second path, the first path (i.e., direct communication path) is first established and then the second path (i.e., indirect communication path) is established. The first base station is used to establish the first path, and the second base station is used to establish the second path. After establishing the first path, the first base station sends the first security activation status of the first path to the second base station, so that the second base station determines the third security activation status of the second path being consistent with the first security activation status based on the first security activation status.

At step 1002b, it is determined that the first security activation status of the first path of the first service is a third security activation status of a second path of the first service.

That is, the first security activation status is directly used as the third security activation status of the second path.

Detailed descriptions of steps 1001b-1002b can be described with reference to the above embodiments.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

FIG. 10c is a flowchart of a multipath transmission method provided by an embodiment of the disclosure. The method is performed by a second base station. As shown in FIG. 10c, the multipath transmission method includes the following step.

At step 1001c, a third security activation status of a second path of a first service is sent to a first base station, the third security activation status of the second path of the first service being used by the first base station for determining a first security activation status of a first path of the first service, in which the first base station is used for direct accessing of the first UE.

The scenario corresponding to the embodiment of FIG. 10c is that the second base station only manages the second path, the second path (i.e., indirect communication path) is first established and then the first path (i.e., direct communication path) is established. The first base station is configured to establish the first path, and the second base station is configured to establish the second path. After establishing the second path, the second base station sends the third security activation status of the second path to the first base station, so that the first base station determines the first security activation status of the first path being consistent with the third security activation status based on the third security activation status.

Detailed description of step 1001c can be described with reference to the above embodiments.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

FIG. 10d is a flowchart of a multipath transmission method provided by an embodiment of the disclosure. The method is performed by a second base station. As shown in FIG. 10d, the multipath transmission method includes the following step.

At step 1001d, a Uu link in a second path is established based on a first security activation status of a first path; and/or, a Uu link of a first path is established based on a third security activation status of a second path.

By executing the above step 1001d, the first security activation status of the established first path is caused to be consistent with the third security activation status of the second path.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

FIG. 10e is a flowchart of a multipath transmission method provided by an embodiment of the disclosure. The method is performed by a second base station. As shown in FIG. 10e, the multipath transmission method includes the following step.

At step 1001e, in response to receiving a MA PDU request sent by a first UE through a first path and/or a second path, a signaling and/or UP data of a first service is transmitted over the first path and the second path simultaneously, in which the first security activation status of the first path is consistent with a second security activation status of a link between the first UE and a second UE in the second path.

In conclusion, in the multipath transmission method provided by the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PC5 link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

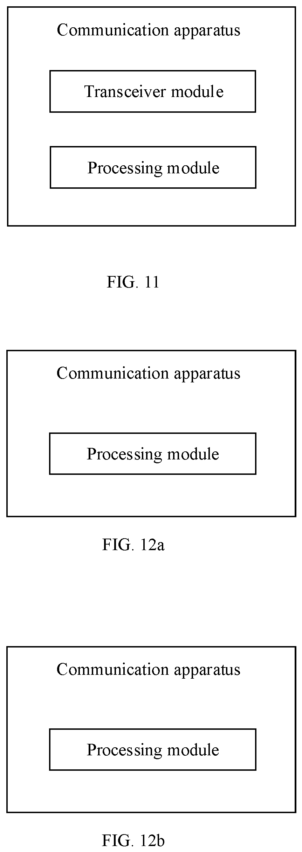

FIG. 11 is a schematic diagram of a communication apparatus provided by an embodiment of the disclosure. As shown in FIG. 11, the apparatus includes:
a transceiver module, configured to obtain a first security activation status of a first path of a first service and a second security activation status of a second path of the first service, in which the first path is used for direct communication between the first UE and a base station, the second path is used for indirect communication between the first UE and the base station through a second UE, and the second security activation status of the second path includes a security activation status of a link between the first UE and the second UE; and
a processing module, configured to, when the first security activation status is consistent with the second security activation status, transmit a signaling and/or UP data of the first service over the first path and the second path.

In conclusion, in the multipath transmission apparatus provided by the embodiment of the disclosure, the first UE obtains the first security activation status of the first path of the first service and the second security activation status of the second path of the first service. The first path is used for direct communication between the first UE and the base station, and the second path is used for indirect communication between the first UE and the base station through the second UE. The second security activation status of the second path includes the security activation status of the link between the first UE and the second UE. When the first security activation status is consistent with the second security activation status, the signaling and/or UP data of the first service can be transmitted over the first path and the second path. In the disclosure, since the base station can ensure that the first security activation status of the Uu link of the first path is consistent with the third security activation status of the Uu link of the second path, when the first security activation status in the first path is consistent with the second security activation status in the second path, it means that the first security activation status of the Uu link in the first path, the third security activation status of the Uu link in the second path, and the second security activation status of the PC5 link in the second path are all consistent. That is, the security activation status of the direct communication path is consistent with that of the indirect communication path. Therefore, in the disclosure, only when the security activation status of the direct communication path is consistent with that of the indirect communication path, simultaneous multipath transmission of the signaling and/or UP data of the first service can be realized over the first path and the second path, thus ensuring the information security during multipath transmission.

Optionally, in an embodiment of the disclosure, the transceiver module is further configured to:
obtain a first indication message sent by the base station, in which the first indication message is used to indicate the first security activation status of the first path; and/or
determine the first security activation status of the first path based on the established first path.

Optionally, in an embodiment of the disclosure, the transceiver module is further configured to:
negotiate with the second UE for a second security activation status of the link between the first UE and the second UE; and/or
determine a second security activation status of the link between the first UE and the second UE based on the established link between the first UE and the second UE.

Optionally, in an embodiment of the disclosure, the transceiver module is further configured to:
negotiate with the second UE for the second security activation status according to the first security activation status, in which the second security activation status is consistent with the first security activation status.

Optionally, in an embodiment of the disclosure, the first path is a Uu link, and the second path includes a PCS link between the first UE and the second UE and a Uu link between the second UE and the base station.

Optionally, in an embodiment of the disclosure, the first security activation status or the second security activation status includes at least one of:
a security activation status corresponding to UP integrity protection and/or encryption protection of the PC5 link;
a security activation status corresponding to UP integrity protection and/or encryption protection of the Uu link;
a security activation status corresponding to signaling integrity protection and/or encryption protection of the PC5 link; or
a security activation status corresponding to signaling integrity protection and/or encryption protection of the Uu link.

Optionally, in an embodiment of the disclosure, the first security activation status or the second security activation status is: activation of security protection or deactivation of security protection.

Optionally, in an embodiment of the disclosure, the first security activation status being consistent with the second security activation status includes:
the first security activation status corresponding to UP integrity protection of a link between the first UE and the base station in the first path being consistent with the second security activation status corresponding to UP integrity protection of the link between the first UE and the second UE in the second path;
the first security activation status corresponding to UP encryption protection of the link between the first UE and the base station in the first path being consistent with the second security activation status corresponding to UP encryption protection of the link between the first UE and the second UE in the second path;
the first security activation status corresponding to signaling integrity protection of the link between the first UE and the base station in the first path being consistent with the second security activation status corresponding to signaling integrity protection of the link between the first UE and the second UE in the second path; or
the first security activation status corresponding to signaling encryption protection of the link between the first UE and the base station in the first path being consistent with the second security activation status corresponding to signaling encryption protection of the link between the first UE and the second UE in the second path.

Optionally, in an embodiment of the disclosure, the apparatus is further configured to:
send a MA PDU request through the first path and/or the second path to trigger transmission of the signaling and/or UP data of the first service using the first path and the second path.

Optionally, in an embodiment of the disclosure, the first service includes a Prose service.

FIG. 12a is a schematic diagram of a communication apparatus provided by an embodiment of the disclosure. As shown in FIG. 12a, the apparatus includes:
a processing module, configured to determine a first security activation status of a first path of a first service and/or a third security activation status of a second path of the first service, in which the first path is used for direct communication between a first UE and the first base station, the second path is used for indirect communication between the first UE and the first base station through a second UE, the third security activation status of the second path includes a security activation status of a link between the second UE and the base station, and the first security activation status is consistent with the third security activation status.

In conclusion, in the communication apparatus provided by the embodiment of the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

Optionally, in an embodiment of the disclosure, the processing module is further configured to perform at least one of:
determining that the first security activation status of the first path of the first service is the third security activation status of the second path of the first service; or
determining the third security activation status of the second path of the first service in the same way as determining the first security activation status of the first path of the first service.

Optionally, in an embodiment of the disclosure, the apparatus is further configured to:
send the first security activation status of the first path of the first service to a second base station, the first security activation status of the first path of the first service being used by the second base station for determining the third security activation status of the second path of the first service, in which the second base station is used for accessing of the second UE.

Optionally, in an embodiment of the disclosure, the processing module is further configured to:
receive the third security activation status of the second path of the first service sent by a second base station, in which the second base station is used for accessing the second UE; and
determine that the third security activation status of the second path of the first service is the first security activation status of the first path of the first service.

Optionally, in an embodiment of the disclosure, the first path is a Uu link, and the second path includes a PC5 link between the first UE and the second UE and a Uu link between the second UE and the base station.

Optionally, in an embodiment of the disclosure, the first security activation status or the third security activation status includes at least one of:
a security activation status corresponding to UP integrity protection and/or encryption protection of the PC5 link;
a security activation status corresponding to UP integrity protection and/or encryption protection of the Uu link;
a security activation status corresponding to signaling integrity protection and/or encryption protection of the PC5 link; or
a security activation status corresponding to signaling integrity protection and/or encryption protection of the Uu link.

Optionally, in an embodiment of the disclosure, the first security activation status or the second security activation status is: activation of security protection or deactivation of security protection.

Optionally, in an embodiment of the disclosure, the first security activation status being consistent with the third security activation status includes:
the first security activation status corresponding to UP integrity protection of a link between the first UE and the base station in the first path being consistent with the third security activation status corresponding to UP integrity protection of the link between the second UE and the base station in the second path;
the first security activation status corresponding to UP encryption protection of the link between the first UE and the base station in the first path being consistent with the third security activation status corresponding to UP encryption protection of the link between the second UE and the base station in the second path;
the first security activation status corresponding to signaling integrity protection of the link between the first UE and the base station in the first path being consistent with the third security activation status corresponding to signaling integrity protection of the link between the second UE and the base station in the second path; or
the first security activation status corresponding to signaling encryption protection of the link between the first UE and the base station in the first path being consistent with the third security activation status corresponding to signaling encryption protection of the link between the second UE and the base station in the second path.

Optionally, in an embodiment of the disclosure, the apparatus is further configured to:
establish a Uu link in the second path based on the first security activation status of the first path; and/or
establish a Uu link of the first path based on the third security activation status of the second path.

Optionally, in an embodiment of the disclosure, the apparatus is further configured to:
send a first indication message to the first UE, in which the first indication message is used to indicate the first security activation status of the first path.

Optionally, in an embodiment of the disclosure, the apparatus is further configured to:
in response to receiving a MA PDU request sent by the first UE through the first path and/or the second path, transmit a signaling and/or UP data of the first service over the first path and the second path simultaneously, in which the first security activation status of the first path is consistent with a second security activation status of a link between the first UE and the second UE in the second path.

FIG. 12b is a schematic diagram of a communication apparatus provided by an embodiment of the disclosure. As shown in FIG. 12b, the apparatus includes:
a processing module, configured to obtain a first security activation status of a first path of a first service and/or a third security activation status of a second path of the first service, in which the first path is used for direct communication between a first UE and a first base station, the second path is used for indirect communication between the first UE and the first base station through a second UE, the third security activation status of the second path includes a security activation status of a link between the second UE and the base station, and the first security activation status is consistent with the third security activation status.

In conclusion, in the communication apparatus provided by the embodiment of the disclosure, the base station determines the first security activation status of the first path of the first service and/or the third security activation status of the second path of the first service. The first path is used for direct communication between the first UE and the first base station, and the second path is used for indirect communication between the first UE and the first base station through the second UE. The third security activation status of the second path includes the security activation status of the link between the second UE and the base station. The first security activation status is consistent with the third security activation status. In the disclosure, since the base station can ensure that the first security activation status of the Uu link of the first path is consistent with the third security activation status of the Uu link of the second path, when the first UE determines that the first security activation status of the first path is consistent with the second security activation status of the second path, multipath transmission of the signaling and/or UP data of the first service can be realized. It can be ensured that only when the first security activation status of the Uu link of the first path, the third security activation status of the Uu link of the second path, and the second security activation status of the PCS link of the second path are all consistent (that is, the security activation status of the direct communication path is consistent with the security activation status of the indirect communication path), simultaneous multipath transmission of the signaling and/or UP data of the first service can be realized by using the first path and the second path, so as to ensure the information security during multipath transmission.

Optionally, in an embodiment of the disclosure, the processing module is further configured to perform at least one of:
determining that the first security activation status of the first path of the first service is the third security activation status of the second path of the first service; or
determining the third security activation status of the second path of the first service in the same way as determining the first security activation status of the first path of the first service.

Optionally, in an embodiment of the disclosure, the processing module is further configured to:
receive the first security activation status of the first path of the first service from the first base station, in which the first base station is used for direct accessing of the first UE; and
determine that the first security activation status of the first path of the first service is the third security activation status of the second path of the first service.

Optionally, in an embodiment of the disclosure, the apparatus is further configured to:
send the third security activation status of the second path of the first service to the first base station, the third security activation status of the second path of the first service being used by the first base station for determining the first security activation status of the first path of the first service, in which the first base station is used for direct accessing of the first UE.

Optionally, in an embodiment of the disclosure, the first security activation status or the third security activation status includes at least one of:
a security activation status corresponding to UP integrity protection and/or encryption protection of a PC5 link;
a security activation status corresponding to UP integrity protection and/or encryption protection of a Uu link;
a security activation status corresponding to signaling integrity protection and/or encryption protection of a PC5 link; or
a security activation status corresponding to signaling integrity protection and/or encryption protection of a Uu link.

Optionally, in an embodiment of the disclosure, the first security activation status or the second security activation status is: activation of security protection or deactivation of security protection.

Optionally, in an embodiment of the disclosure, the first security activation status being consistent with the third security activation status includes:
the first security activation status corresponding to UP integrity protection of a link between the first UE and the base station in the first path being consistent with the third security activation status corresponding to UP integrity protection of the link between the second UE and the base station in the second path;
the first security activation status corresponding to UP encryption protection of the link between the first UE and the base station in the first path being consistent with the third security activation status corresponding to UP encryption protection of the link between the second UE and the base station in the second path;
the first security activation status corresponding to signaling integrity protection of the link between the first UE and the base station in the first path being consistent with the third security activation status corresponding to signaling integrity protection of the link between the second UE and the base station in the second path; or
the first security activation status corresponding to signaling encryption protection of the link between the first UE and the base station in the first path being consistent with the third security activation status corresponding to signaling encryption protection of the link between the second UE and the base station in the second path.

Optionally, in an embodiment of the disclosure, the apparatus is further configured to:
establish a Uu link in the second path based on the first security activation status of the first path; and/or
establish a Uu link of the first path based on the third security activation status of the second path.

Optionally, in an embodiment of the disclosure, the apparatus is further configured to:
in response to receiving a MA PDU request sent by the first UE through the first path and/or the second path, transmit a signaling and/or UP data of the first service over the first path and the second path simultaneously, in which the first security activation status of the first path is consistent with a second security activation status of a link between the first UE and the second UE in the second path.

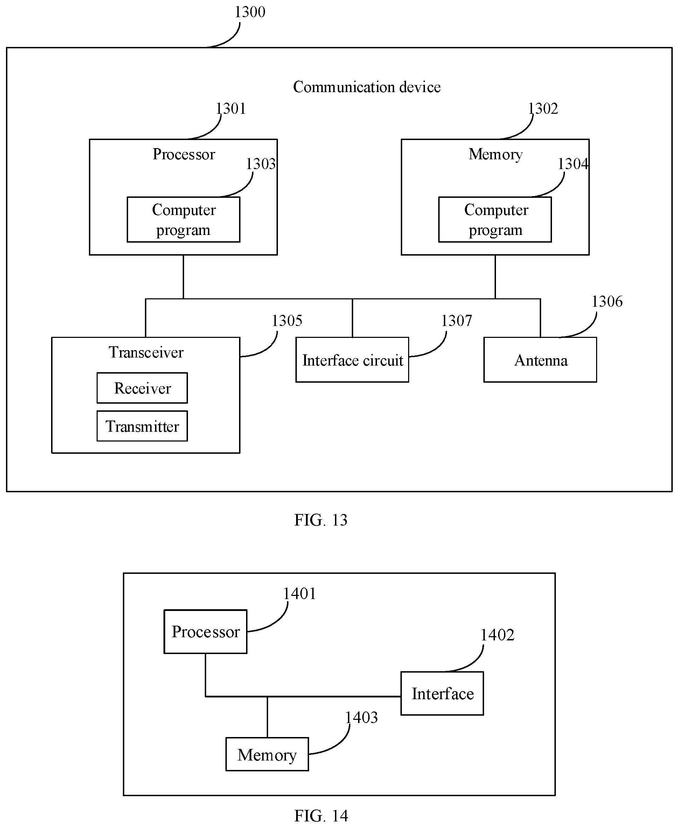

FIG. 13 is a schematic diagram of a communication device 1300 provided by an embodiment of the disclosure. The communication device 1300 may be a base station, a terminal, or a chip, a chip system or a processor that supports the base station to realize the above-described methods, or a chip, a chip system or a processor that supports the terminal to realize the above-described methods. The device may be used to realize the methods described in the above method embodiments with reference to the descriptions of the above-described method embodiments.

The communication device 1300 may include one or more processors 1301. The processor 1301 may be a general purpose processor or a dedicated processor, such as, a baseband processor or a central processor. The baseband processor is used for processing communication protocols and communication data. The central processor is used for controlling the communication device (e.g., base station, baseband chip, terminal, terminal chip, CU, and DU), executing computer programs, and processing data of the computer programs.

Optionally, the communication device 1300 may further include one or more memories 1302 on which a computer program may be stored. When the processor 1301 executes the computer program 1304, the communication device 1300 is caused to perform the methods described in the above method embodiments. Optionally, data may also be stored in the memory 1302. The communication device 1300 and the memory 1302 may be provided separately or may be integrated together.

Optionally, the communication device 1300 may also include a transceiver 1305 and an antenna 1306. The transceiver 1305 may be referred to as transceiver unit, transceiver machine, or transceiver circuit, for realizing the transceiver function. The transceiver 1305 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device 1300 may also include one or more interface circuits 1307. The interface circuits 1307 are used to receive code instructions and transmit them to the processor 1301. The processor 1301 runs the code instructions to cause the communication device 1300 to perform the methods described in the method embodiments.

In an implementation, the processor 1301 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1301 may store a computer program 1303 that can be executed by the processor 1301 and may cause the communication device 1300 to perform the methods described in the method embodiments above. The computer program 1303 may be solidified in the processor 1301, in which case the processor 1301 may be implemented by hardware.

In an implementation, the communication device 1300 may include circuits. The circuits may implement the sending, receiving or communicating function in the preceding method embodiments. The processor and transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above descriptions of embodiments may be a base station or a terminal, but the scope of the communication device described in the disclosure is not limited thereto, and the structure of the communication device may not be limited by FIG. 13. The communication device may be a stand-alone device or may be part of a larger device. For example, the described communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, base stations, cloud devices, artificial intelligence devices, and the like; and
(6) others.

The case that the communication device is a chip or a chip system can be referred to the schematic diagram of the chip shown in FIG. 14. The chip shown in FIG. 14 includes a processor 1401 and an interface 1402. There may be one or more processors 1401, and there may be multiple interfaces 1402.

Optionally, the chip further includes a memory 1403 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the functions of any of the method embodiments described above are implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited by the disclosure. When configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A multipath transmission method, performed by a first user equipment (UE), comprising:
obtaining a first security activation status of a first path of a first service and a second security activation status of a second path of the first service, wherein the first path is used for direct communication between the first UE and a base station, the second path is used for indirect communication between the first UE and the base station through a second UE, and the second security activation status of the second path comprises a security activation status of a link between the first UE and the second UE; and
transmitting a signaling and/or user plane (UP) data of the first service over the first path and the second path in response the first security activation status being consistent with the second security activation status.

2. The method of claim 1, wherein obtaining the first security activation status of the first path of the first service comprises:
obtaining a first indication message sent by the base station, wherein the first indication message is used to indicate the first security activation status of the first path; and/or
determining the first security activation status of the first path based on the established first path.

3. The method of claim 1 or 2, wherein obtaining the second security activation status of the second path of the first service comprises:
negotiating with the second UE for a second security activation status of the link between the first UE and the second UE; and/or
determining the second security activation status of the link between the first UE and the second UE based on the established link between the first UE and the second UE.

4. The method of claim 3, wherein negotiating with the second UE for the second security activation status of the link between the first UE and the second UE comprises:
negotiating with the second UE for the second security activation status according to the first security activation status, wherein the second security activation status is consistent with the first security activation status.

5. The method of claim 1, wherein the first path is a Uu link, and the second path comprises a PCS link between the first UE and the second UE and a Uu link between the second UE and the base station.

6. The method of claim 5, wherein the first security activation status or the second security activation status comprises at least one of:
a security activation status corresponding to UP integrity protection and/or encryption protection of a PCS link;
a security activation status corresponding to UP integrity protection and/or encryption protection of a Uu link;
a security activation status corresponding to signaling integrity protection and/or encryption protection of a PCS link; or
a security activation status corresponding to signaling integrity protection and/or encryption protection of a Uu link.

7. The method of any one of claims 1-6, wherein the first security activation status or the second security activation status is: activation of security protection or deactivation of security protection.

8. The method of any one of claims 1-7, wherein the first security activation status being consistent with the second security activation status comprises:
the first security activation status corresponding to UP integrity protection of a link between the first UE and the base station in the first path being consistent with the second security activation status corresponding to UP integrity protection of the link between the first UE and the second UE in the second path;
the first security activation status corresponding to UP encryption protection of the link between the first UE and the base station in the first path being consistent with the second security activation status corresponding to UP encryption protection of the link between the first UE and the second UE in the second path;
the first security activation status corresponding to signaling integrity protection of the link between the first UE and the base station in the first path being consistent with the second security activation status corresponding to signaling integrity protection of the link between the first UE and the second UE in the second path; or
the first security activation status corresponding to signaling encryption protection of the link between the first UE and the base station in the first path being consistent with the second security activation status corresponding to signaling encryption protection of the link between the first UE and the second UE in the second path.

9. The method of claim 1, further comprising:
sending a multiple access (MA) protocol data unit (PDU) request through the first path and/or the second path to trigger transmission of the signaling and/or the UP data of the first service using the first path and the second path.

10. The method of claim 1, wherein the first service comprises a proximity based service.

11. A multipath transmission method, performed by a first base station, comprising:
determining a first security activation status of a first path of a first service and/or a third security activation status of a second path of the first service, wherein the first path is used for direct communication between a first UE and the first base station, the second path is used for indirect communication between the first UE and the first base station through a second UE, the third security activation status of the second path comprises a security activation status of a link between the second UE and the base station, and the first security activation status is consistent with the third security activation status.

12. The method of claim 11, wherein determining the third security activation status of the second path of the first service comprises at least one of:
determining that the first security activation status of the first path of the first service is the third security activation status of the second path of the first service; or
determining the third security activation status of the second path of the first service in the same way as determining the first security activation status of the first path of the first service.

13. The method of claim 11, further comprising:
sending the first security activation status of the first path of the first service to a second base station, the first security activation status of the first path of the first service being used by the second base station for determining the third security activation status of the second path of the first service, wherein the second base station is used for accessing of the second UE.

14. The method of claim 11, wherein determining the first security activation status of the first path of the first service comprises:
receiving the third security activation status of the second path of the first service sent by a second base station, wherein the second base station is used for accessing the second UE; and
determining that the third security activation status of the second path of the first service is the first security activation status of the first path of the first service.

15. The method of claim 11, wherein the first path is a Uu link, and the second path comprises a PCS link between the first UE and the second UE and a Uu link between the second UE and the base station.

16. The method of claim 11, wherein the first security activation status or the third security activation status comprises at least one of:
a security activation status corresponding to UP integrity protection and/or encryption protection of a PCS link;
a security activation status corresponding to UP integrity protection and/or encryption protection of a Uu link;
a security activation status corresponding to signaling integrity protection and/or encryption protection of a PCS link; or
a security activation status corresponding to signaling integrity protection and/or encryption protection of a Uu link.

17. The method of claim 11, wherein the first security activation status or the third security activation status is: activation of security protection or deactivation of security protection.

18. The method of claim 11, wherein the first security activation status being consistent with the third security activation status comprises:
the first security activation status corresponding to UP integrity protection of a link between the first UE and the base station in the first path being consistent with the third security activation status corresponding to UP integrity protection of the link between the second UE and the base station in the second path;
the first security activation status corresponding to UP encryption protection of the link between the first UE and the base station in the first path being consistent with the third security activation status corresponding to UP encryption protection of the link between the second UE and the base station in the second path;
the first security activation status corresponding to signaling integrity protection of the link between the first UE and the base station in the first path being consistent with the third security activation status corresponding to signaling integrity protection of the link between the second UE and the base station in the second path; or
the first security activation status corresponding to signaling encryption protection of the link between the first UE and the base station in the first path being consistent with the third security activation status corresponding to signaling encryption protection of the link between the second UE and the base station in the second path.

19. The method of claim 11, further comprising:
establishing a Uu link in the second path based on the first security activation status of the first path; and/or
establishing a Uu link of the first path based on the third security activation status of the second path.

20. The method of claim 11, further comprising:
sending a first indication message to the first UE, wherein the first indication message is used to indicate the first security activation status of the first path.

21. The method of claim 11, further comprising:
in response to receiving a multiple access (MA) protocol data unit (PDU) request sent by the first UE through the first path and/or the second path, transmitting a signaling and/or user plane (UP) data of the first service over the first path and the second path simultaneously, wherein the first security activation status of the first path is consistent with a second security activation status of a link between the first UE and the second UE in the second path.

22. A multipath transmission method, performed by a second base station, comprising:
obtaining a first security activation status of a first path of a first service and/or a third security activation status of a second path of the first service, wherein the first path is used for direct communication between a first UE and a first base station, the second path is used for indirect communication between the first UE and the first base station through a second UE, the third security activation status of the second path comprises a security activation status of a link between the second UE and the base station, and the first security activation status is consistent with the third security activation status.

23. The method of claim 22, wherein obtaining the third security activation status of the second path of the first service, comprises at least one of:
determining that the first security activation status of the first path of the first service is the third security activation status of the second path of the first service; or
determining the third security activation status of the second path of the first service in the same way as determining the first security activation status of the first path of the first service.

24. The method of claim 22, wherein obtaining the third security activation status of the second path of the first service comprises:
receiving the first security activation status of the first path of the first service from the first base station, wherein the first base station is used for direct accessing of the first UE; and
determining that the first security activation status of the first path of the first service is the third security activation status of the second path of the first service.

25. The method of claim 22, further comprising:
sending the third security activation status of the second path of the first service to the first base station, the third security activation status of the second path of the first service being used by the first base station for determining the first security activation status of the first path of the first service, wherein the first base station is used for direct accessing of the first UE.

26. The method of claim 22, wherein the first security activation status or the third security activation status comprises at least one of:
a security activation status corresponding to UP integrity protection and/or encryption protection of a PC5 link;
a security activation status corresponding to UP integrity protection and/or encryption protection of a Uu link;
a security activation status corresponding to signaling integrity protection and/or encryption protection of a PC5 link; or
a security activation status corresponding to signaling integrity protection and/or encryption protection of a Uu link.

27. The method of claim 22, wherein the first security activation status or the third security activation status is: activation of security protection or deactivation of security protection.

28. The method of claim 22, wherein the first security activation status being consistent with the third security activation status comprises:
the first security activation status corresponding to UP integrity protection of a link between the first UE and the base station in the first path being consistent with the third security activation status corresponding to UP integrity protection of the link between the second UE and the base station in the second path;
the first security activation status corresponding to UP encryption protection of the link between the first UE and the base station in the first path being consistent with the third security activation status corresponding to UP encryption protection of the link between the second UE and the base station in the second path;
the first security activation status corresponding to signaling integrity protection of the link between the first UE and the base station in the first path being consistent with the third security activation status corresponding to signaling integrity protection of the link between the second UE and the base station in the second path; or
the first security activation status corresponding to signaling encryption protection of the link between the first UE and the base station in the first path being consistent with the third security activation status corresponding to signaling encryption protection of the link between the second UE and the base station in the second path.

29. The method of claim 22, further comprising:
establishing a Uu link in the second path based on the first security activation status of the first path; and/or
establishing a Uu link of the first path based on the third security activation status of the second path.

30. The method of claim 22, further comprising:
in response to receiving a multiple access (MA) protocol data unit (PDU) request sent by the first UE through the first path and/or the second path, transmitting a signaling and/or user plane (UP) data of the first service over the first path and the second path simultaneously, wherein the first security activation status of the first path is consistent with a second security activation status of a link between the first UE and the second UE in the second path.

31. A communication apparatus, configured in a first user equipment (UE), comprising:
a transceiver module, configured to obtain a first security activation status of a first path of a first service and a second security activation status of a second path of the first service, wherein the first path is used for direct communication between the first UE and a base station, the second path is used for indirect communication between the first UE and the base station through a second UE, and the second security activation status of the second path comprises a security activation status of a link between the first UE and the second UE; and
a processing module, configured to transmit a signaling and/or user plane (UP) data of the first service over the first path and the second path in response to the first security activation status being consistent with the second security activation status.

32. A communication apparatus, configured in a first base station, comprising:
a processing module, configured to determine a first security activation status of a first path of a first service and/or a third security activation status of a second path of the first service, wherein the first path is used for direct communication between a first UE and the first base station, the second path is used for indirect communication between the first UE and the first base station through a second UE, the third security activation status of the second path comprises a security activation status of a link between the second UE and the base station, and the first security activation status is consistent with the third security activation status.

33. A communication apparatus, configured in a second base station, comprising:
a processing module, configured to obtain a first security activation status of a first path of a first service and/or a third security activation status of a second path of the first service, wherein the first path is used for direct communication between a first UE and a first base station, the second path is used for indirect communication between the first UE and the first base station through a second UE, the third security activation status of the second path comprises a security activation status of a link between the second UE and the base station, and the first security activation status is consistent with the third security activation status.

34. A communication device, comprising a processor and a memory, wherein the memory stores a computer program, and the processor executes the computer program stored in the memory to cause the device to execute the method of any one of claims 1-10, or the processor executes the computer program stored in the memory to cause the device to execute the method of any one of claims 11-21, or the processor executes the computer program stored in the memory to cause the device to execute the method of any one of claims 22-30.

35. A communication device, comprising a processor and an interface circuit, wherein
the interface circuit is configured to receive code instructions and transmit the code instructions to the processor; and
the processor is configured to run the code instructions to perform the method of any one of claims 1-10, or to run the code instructions to perform the method of any one of claims 11-21, or to run the code instructions to perform the method of any one of claims 22-30.

36. A computer-readable storage medium for storing instructions, wherein when the instructions are executed, the method of any one of claims 1-10 is implemented, or when the instructions are executed, the method of any one of claims 11-21 is implemented, or when the instructions are executed, the method of any one of claims 22-30 is implemented.
